Europäisches Patentamt

European Patent Office

Office européen des brevets

(11) Publication number: **0 166 104**
**B1**

(12) EUROPEAN PATENT SPECIFICATION

(45) Date of publication of patent specification: **27.09.89**

(21) Application number: **85104697.9**

(22) Date of filing: **18.04.85**

(51) Int. Cl.⁴: **F 04 D 29/22,** F 04 D 29/24,
B 60 S 1/56

(54) **Centrifugal pump with a dualoutlet.**

(30) Priority: **30.04.84 IT 6743584**

(43) Date of publication of application:
**02.01.86 Bulletin 86/01**

(45) Publication of the grant of the patent:
**27.09.89 Bulletin 89/39**

(84) Designated Contracting States:
**BE DE FR GB SE**

(56) References cited:
**EP-A-0 128 446**
**FR-A-1 142 701**
**FR-A-2 278 542**
**US-A-2 946 288**
**US-A-2 963 978**
**US-A-3 033 015**
**US-A-3 220 553**
**US-A-3 510 229**

(73) Proprietor: **MES S.A.**
**Strada Cantonale**
**CH-6855 Stabio (CH)**

(72) Inventor: **Bianco, Carlo**
**Via Montarina, 12**
**Lugano (CH)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

The present invention relates to an impeller for centrifugal pumps having dual delivery outlets selectable by reversing the direction of rotation of the impeller itself, particularly for motor vehicle windshield systems.

An earlier patent application by this same Applicant, EP—A—0,128,446, discloses as an intermediate document comprised in the state of art within the terms of Art. 54(3) EPC for the designated states DE, FR and GB, a dual delivery outlet pump comprising a stator case wherein a collector space formed of two collector chambers is delimited, each in communication with an impeller compartment through a respective tangential conduit. The chambers are separated from each other in sealed relationship by an elastic membrane which is moved to selectively shut off valve seats in each chamber according to the impeller direction of rotation.

Thus, the pump is enabled to provide, at corresponding delivery outlets, respective delivery rates which are selected by reversing the direction of rotation of the impeller.

Pumps of the type specified above find widespread and advantageous application in motor vehicles, in particular motor cars, for supplying cleansing fluid to the windshield and headlight washers. The pump is, in that case, driven by a DC motor and switching between the dual delivery outlets to the different systems is accomplished by reversing the polarity to said motor.

Heretofore, to supply the different washer systems for the windows and headlights with cleansing fluid, the same delivery pressure has been adopted owing to the headlights being also cleaned with the assistance of wipers which are similar to those used for window wiping. However, such auxiliary wipers for headlight wiping may be eliminated, to bring about a simplification in the washing systems and consequent savings, if the cleansing fluid is supplied at a definitely higher pressure, advantageously at twice the pressure at which the window washing water is supplied. This is the equivalent of doubling the pump delivery head when the impeller turns in the direction corresponding to the selection of the delivery conduit or outlet supplying the headlight washer system.

In order to achieve such a significant variation of delivery head, one can manipulate the rotational speed of the impeller by adopting a different speed of rotation for each direction of rotation by virtue of an appropriate manipulation of the mode of power supply to the motor.

A solution of this type provides the inclusion of a drop resistor in series with the motor in connection with one of the two polarities. Thus, the underpowered motor will slow down to a point on its characteristic curve where the impeller drag equals the drive power.

Another solution consists of providing the motor with a third auxiliary brush which is positioned on the commutator to form, with the opposite polarity brush, an angle different from 180°. By feeding the motor with two brushes so arranged with respect to each other, speed is significantly slowed on account of a corresponding deterioration in the motors' performance.

Both these solutions have considerable drawbacks mainly represented by a large waste of power, increased complexity of the motor power circuit, and above all by decreased reliability of operation resulting from the electrical and thermal stresses to which the motor is subjected in either case.

A centrifugal pump having the features of the preamble of claim 1 is known from US—A—3,033,015. Although this known pump is intended to deliver liquid at substantially the same rate when operated in different directions at two different speeds, this prior pump is able to produce different heads when the impeller is rotated with equal speed in the two directions of rotation. However no teaching can be deduced from this document that, by using a variable geometry impeller, it is impossible to selectively pump fluid towards one of two outlets of the pump, with different delivery heads.

The present invention is essentially directed to obviate the above drawbacks and to improve the known solution, and within this general aim, it is directed to achieve a significant change in delivery head when the direction of rotation of the impeller is changed in a dual delivery outlet centrifugal pump as specified, without in any way affecting the electric parameters of the pump drive motor, keeping unaltered in particular both the power supply voltage and motor performance.

This is accomplished by the centrifugal pump according to this invention, as defined in the appended claims.

The features and advantages of the invention will be apparent from the detailed description that follows, with reference to the accompanying drawings, given herein by way of non-limitative example, and where:

Figure 1 is a part-sectional elevation view of a dual delivery outlet centrifugal pump with variable geometry impeller according to this invention;

Figure 2 is an elevation view of the impeller; and

Figures 3 and 4 are similar cross-sectional views, taken along the lines III—III and IV—IV, respectively, of Figure 1, showing two different geometric configurations of the impeller in the two corresponding directions of rotation thereof.

In the drawings, the numeral 10 designates a dual delivery outlet pump which comprises a stator case 11 having an impeller compartment 12 with two collector chambers 13—14, each provided with an outlet or delivery manifold 15—16, respectively. Like in the cited EP—A—0,128,446 by the same Applicant, the two collector chambers are preferably superimposed on each other even though a juxtaposed arrangement thereof is also possible and separated in sealed relationship by an elastic membrane 17 which is moved to selectively block valve seats 18—19 of each chamber depending on the direction of rotation of the impeller 20 accommodated rotatably within the compartment 12 and driven alternatively and selectively rotatively in opposite directions by a changeable polarity motor 21. Each collector chamber communicates with the compartment 12 of the impeller through a tangential conduit 22—23, respectively, which is angularly orientated according to the corresponding direction of rotation of the impeller 10.

According to this invention, the impeller has variable geometry in the sense that it can assume two different configurations with two different diameters depending on the direction of rotation, and thereby correspondingly provide two different values of the pump delivery head: such value being greater for the maximum diameter and lesser for the minimum diameter. This is accomplished, according to the invention, by providing the impeller with two or more composite articulated vanes, each comprising a fixed portion 24—25 respectively, integral or rigid with the hub 26, and a relatively movable portion 27—28 hinged on each end of the corresponding relatively fixed portion. The hinge axes of movable vane portions 27, 28 are preferably parallel to the axis of rotation of the impeller, even though an inclined arrangement of the hinge axes with respect to the axis of rotation of the impeller is also feasible. Each fixed vane portion is terminated with a lug 24a—25a forming an angle of substantially 90° with the intermediate part of the relatively fixed portion of the impeller. The right angled lugs act as a stop for the respective movable vane portions and limit the opening angle thereof, which, in the example shown, is approximately 90°; the movable portion being thus arranged to extend substantially at right angles with respect to the fixed portion whereto it is hinged as the impeller is actuated and assumes its maximum diameter. Of course, if desired, the opening angle may be different from 90°, in particular greater than 90°. The closing and opening of the movable portions 27—28 of the vanes takes place spontaneously by virtue of the hydrodynamic effect, and the change of diameter, and consequent change in delivery head, takes place automatically on reversing the impeller direction of rotation.

Preferably, the movable portions of the vanes have a center recess 27a, 28a which, in addition to the hydrodynamic blade concavity effect is also intended to receive a part of the volume of the hub 26 in order to allow said movable portions to arrange themselves, parallel to one another when in a folded down condition, such as assumed when the impeller is rotated in a direction causing it to assume the smaller of the two different diameters, which improves the efficiency of the impeller for that vane configuration. On the opposite side the fixed blade portions have a convex surface, which also contributes to the desired hydrodynamic effect.

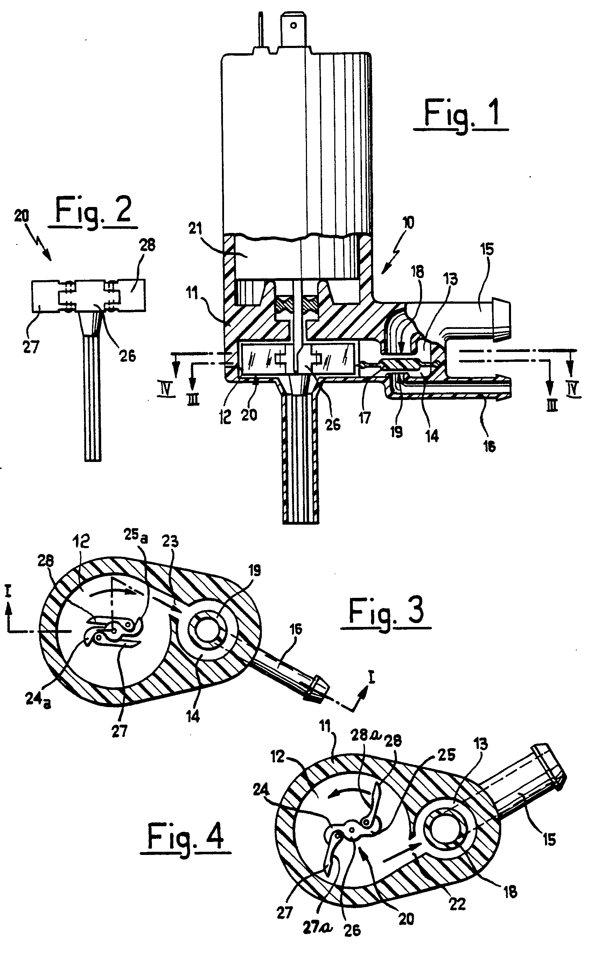

It will be understood that when the impeller is rotated in clockwise direction as shown in Figure 3, the hydrodynamic force acting on the movable portion of the vanes urges such portion into their closed position. When the impeller is instead rotated in the anticlockwise direction as shown in Figure 4, the hydrodynamic forces acting on the movable portion of the vanes urge the latter into their open position.

It is important to observe that for the two different directions of rotation of the impeller, the voltage to the motor 21 is not changed, thereby the smaller delivery head corresponding to the smaller of the two different diameters assumable by the impeller, allows increased motor rpm and attendant decrease of the current consumption.

The variation in delivery head between the two different directions of rotation of the impeller is obviously dependent on the change of diameter of the impeller itself and hence on the ratio between the extension of the fixed portion to the extension of the movable portion of each vane. From many tests carried out, the change in delivery head has shown to vary linearly with the ratio between said extensions.

## Claims

1. A centrifugal pump in particular for motor vehicle washer systems, including an impeller (20) arranged in an impeller compartment (12) of a stator pump case (11) for rotating in two opposed directions, said impeller (20) having a variable geometry including vanes (24—28) having fixed portions (24, 25) defining a radial extension and articulated portions (27, 28) opening in a first rotation direction of said impeller, respectively closing in a second opposite rotation direction, so that in said first direction of rotation the vanes have a first radial extension given by the sum of the radial extensions of said fixed and articulated portions (24—26) and in said second direction of rotation the vanes have a second radial extension given by the radial extension of said fixed portions (24—26) characterized in that said pump (20) has two delivery outlets (15, 16) in communication with said impeller compartment and shutter means (17) for selectively closing one of said delivery outlets according to the rotation direction of said impeller and in said first direction of rotation with said first radial extension the vanes generate a first greater delivery head toward a first (15) of said delivery outlets and in said second direction of rotation with said second radial extension the vanes generate a second lower delivery head toward a second (16) of said delivery outlets.

2. A pump according to Claim 1, characterized in that said impeller (20, 24—28a) comprises two or more radial vanes (24, 25, 27—28a), each having said fixed portion (24, 25) integral with a hub (26), and a movable portion (27, 28) hinged on said fixed portion (24, 25); the two portions of each vane (24, 25, 27—28a) being profiled to allow spontaneous opening of the movable portion (27, 28) in one direction of rotation of the impeller (20, 24—28a) and spontaneous closing of said movable portion (27, 28) in an opposite direction of rotation thanks to the hydrodynamic effect.

3. A pump according to Claims 1 and 2. wherein an end of said fixed portion (24, 25) of each vane (24, 25, 27—28a) is provided with a lug (24a, 25a) set at an angle and acting as a stop for the opening of the respective movable portion (27, 28) and limiting the opening angle thereof.

4. A pump according to the preceding claims, wherein the opening angle of the movable portion (27, 28) of each vane (24, 25, 27—28a), relatively to the fixed portion (24, 25), is equal to 90°.

5. A pump according to Claims 1 to 3, wherein the opening angle of the movable portion (27, 28) of each vane (24, 25, 27—28a) relatively to the fixed portion (24, 25) is other than 90°.

6. A pump according to the preceding claims, characterized in that the movable portions (27, 28) of said impeller (20, 24—28a) have a center recess (27a, 28a) adapted to contain a part of the hub (26) volume to permit said movable portions (27, 28) to arrange themselves parallel to each other, when in a folded down condition.

**Patentansprüche**

1. Zentrifugalpumpe, insbesondere für Waschanlagen in Kraftfahrzeugen, mit einem zur Drehung in zwei entgegengesetzten Richtungen ausgebildeten, in einer Laufradkammer (12) eines Pumpenstatorgehäuses (11) angeordneten Laufrad (20), welches Laufrad (20) eine veränderliche Geometrie, umfassend Flügel (24—28) mit fixen Teilen (24, 25), die eine radiale Erstreckung definieren, und angelenkten Teilen (27, 28), die sich in einer ersten Drehrichtung des Laufrades öffnen bzw. in einer zweiten entgegengesetzten Drehrichtung schließen, aufweist, so daß in der ersten Drehrichtung die Flügel eine erste Radialerstreckung, gegeben durch die Summe der Radialerstreckungen der fixen und der angelenkten Teile (24—26), und in der zweiten Drehrichtung die Flügel eine zweite Radialerstreckung, gegeben durch die Radialerstreckung der fixen Teile (24—26), besitzen, dadurch gekennzeichnet, daß die Pumpe (20) zwei Förderauslässe (15, 16) in Verbindung mit der Laufradkammer und eine Verschlußschiebereinrichtung (17) zum selektiven Verschluß einer der beiden Förderauslässe, je nach der Drehrichtung des Laufrades, besitzt, und die Flügel in der ersten Drehrichtung mit der genannten ersten Radialerstreckung einen größere Förderdruck gegen den ersten (15) der genannten Förderauslässe hin und die Flügel in der genannten zweiten Drehrichtung mit der genannten zweiten Radialerstreckung einen zweiten geringeren Förderdruck gegen den zweiten (16) der genannten Förderauslässe hin erzeugen.

2. Pumpe nach Anspruch 1, dadurch gekennzeichnet, daß das Laufrad (20, 24—28a) aus zwei oder mehreren radialen Flügeln (24, 25, 27—28a) besteht, von denen jeder den ersten fixen Teil (24, 25) einteilig mit einer Nabe (26) ausgebildet, und einen beweglichen Teil (27, 28), der an den fixen Teil (24, 25) angelenkt ist, besitzt, wobei die beiden Teile eines jeden Flügels (24, 25, 27—28a) ein solches Profil besitzen, daß sie eine spontane Öffnung des beweglichen Teiles (27, 28) in einer Drehrichtung des Laufrades (20, 24—28a) und eine spontane Schließung des beweglichen Teiles (27, 28) in der entgegengesetzten Drehrichtung dank des hydrodynamischen Effektes gestatten.

3. Pumpe nach den Ansprüchen 1 und 2, dadurch gekennzeichnet, daß ein Ende des fixen Teiles (24, 25) eines jeden Flügels (24, 25, 27—28a) mit einer Nase (24a, 25a) versehen ist, die in einem Winkel angeordnet ist und als Stoppeinrichtung für die Öffnung des betreffenden beweglichen Teiles (27, 29) wirkt und dessen Öffnungswinkel begrenzt.

4. Pumpe nach einem der vorhergehenden Ansprüche, dadurch gekennzeichnet, daß der Öffnungswinkel des beweglichen Teiles (27, 28) eines jeden Flügels (24, 25, 27—28a) in bezug auf den fixen Teil (24, 25) gleich 90° beträgt.

5. Pumpe nach einem der Ansprüche 1 bis 3, dadurch gekennzeichnet, daß der Öffnungswinkel des beweglichen Teiles (27, 28) eines jeden Flügels (24, 25, 27—28a) in bezug auf den fixen Teil (24, 25) ein anderer als 90° ist.

6. Pumpe nach einem der vorhergehenden Ansprüche, dadurch gekennzeichnet, daß die beweglichen Teile (27, 28) des Laufrades (20, 24—28) eine zentrale Vertiefung (27a, 28a) besitzen, um einen Teil des Volumens der Nabe (26) aufzunehmen und es den beweglichen Teilen (27, 28) zu gestatten, sich selbst parallel zueinander anzuordnen, wenn sie sich in dem nach unten gelegten Zustand befinden.

**Revendications**

1. Pompe centrifuge en particulier pour systèmes de lavage de véhicules à moteur, comprenant une turbine (20) disposée dans un compartiment turbine (12) d'un carter de pompe stationnaire (11) pour tourner dans deux directions opposées, ladite turbine (20) possédant une géométrie variable comprenant des ailettes (24—28) ayant des parties fixes (24, 25) définissant une étendue radiale et des parties articulées (27, 28) se déployant dans un premier sens de rotation de ladite turbine, se rétractant dans un second sens de rotation opposé, respectivement, de sorte que dans ledit premier sens de rotation, les ailettes possèdent une première étendue radiale déterminée par la somme des étendues radiales desdites parties fixes et articulées (24—26) et dans ledit second sens de rotation, les ailettes ont une seconde étendue radiale déterminée par l'étendue radiale desdites parties fixes (24—26), caractérisée en ce que ladite pompe (20) possède deux orifices de refoulement (15, 16) en communication avec ledit compartiment turbine et des moyens (17) formant obturateur pour fermer sélectivement un desdits orifices de refoulement selon le sens de rotation de ladite turbine, et dans ledit premier sens de rotation avec ladite première étendue radiale les ailettes engendrent une première pression de refoulement plus grande vers un premier (15) desdits orifices de refoulement, et dans ledit second sens de rotation avec ladite seconde extension radiale, les ailettes engendrent une seconde pression de refoulement plus faible vers un second (16) desdits orifices de refoulement.

2. Pompe selon la revendication 1, caractérisée en ce que ladite turbine (20, 24—28a) comporte deux ou plusieurs ailettes radiales (24, 25, 27—28a), ayant chacune ladite partie fixe (24, 25) faisant corps avec un moyeu, (26), et une partie déplaçable (27, 28) articulée sur ladite partie fixe (24, 25); les deux parties de chaque ailette (24, 25, 27—28a) étant profilées pour permettre un déploiement spontané de la partie déplaçable (27, 28) dans un sens de rotation de la turbine (20, 24—28a) et une rétraction spontanée de ladite partie déplaçable (27, 28) dans un sens opposé de rotation grâce à l'effet hydrodynamique.

3. Pompe selon les revendications 1 et 2, dans laquelle une extrémité de ladite partie fixe (24, 25) de chaque ailette (24, 25, 27—28a) est munie d'une patte (24a, 25a) disposée angulairement et jouant le rôle d'une butée pour le déploiement de la partie déplaçable respective (27, 28) et la limitation de l'angle de déploiement de celle-ci.

4. Pompe selon les revendications précédentes, dans laquelle l'angle de déploiement de la partie déplaçable (27, 28) de chaque ailette (24, 25, 27—28a), par rapport à la partie fixe (24, 25) est égal à 90°.

5. Pompe selon les revendications 1 à 3, dans laquelle l'angle de déploiement de la partie déplaçable (27, 28) de chaque ailette (24, 25, 27—28a) par rapport à la partie fixe (24, 25) est différent de 90°.

6. Pompe selon les revendications précédentes, caractérisée en ce que les parties déplaçables (27, 28) de ladite turbine (20, 24—28a) possèdent un évidement central (27a, 28a) apte à contenir une partie du volume du moyeu (26) pour permettre auxdites parties déplaçables (27, 28) de se placer d'elles'mêmes, parallèles entre elles, lorsqu'elles se trouvent dans l'état rabattu.

Fig. 1

Fig. 2

Fig. 3

Fig. 4